# EUROPEAN PATENT APPLICATION

(11) **EP 2 429 071 A1**
(43) Date of publication of application: **14.03.2012**
(21) Application number: 11783809.4
(22) Date of filing: 12.01.2011
(51) Int. Cl.: H02M 3/335

(54) **AUTONOMOUS ELECTRICAL POWER SUPPLY SOURCE WITH A RECHARGING FUNCTION USING ONE RECHARGEABLE BATTERY**

(30) Priority: 01.11.2010 RU 2010144655
(71) Applicant: Stepanov, Arkady Anatolievich, Orsk, Orenburgskaya obl. 462420 (RU); Khoryakov, Vladimir Vladimirovich, Orsk, Orenburgskaya obl. 462429 (RU)
(72) Inventor: Stepanov, Arkady Anatolievich, Orsk, Orenburgskaya obl. 462420 (RU)
(74) Representative: Bucher, Ralf Christian
(86) International application number: PCT/RU2011/000006
(87) International publication number: WO 2011/145975

(57) **Abstract**

The invention relates to the field of electrical engineering and can be used for the autonomous supply of electrical energy to electrical consumers. The technical result consists in a manifold increase in an uninterrupted operating time which is equal to the service life of the rechargeable battery using one DC current source. The autonomous power supply source with a recharging function using one rechargeable battery comprises a DC source and an inverter, with an active load being connected in parallel with the output of said inverter via a bridge rectifier. The autonomous power supply source with a recharging function using one rechargeable battery is equipped with a second bridge rectifier, a matching transformer, two electronic transistor switches with a control system, a diode and capacitors, wherein the input of the second bridge rectifier is connected in parallel with the secondary winding of the matching transformer, the primary winding of said matching transformer being connected in series with the output of the inverter and the input of the first bridge rectifier, wherein a capacitor and, via an electronic switch, a load with a capacitor are connected in parallel with the output of said first bridge rectifier, the output of the second bridge rectifier is connected to the capacitor and, via a second electronic switch and a diode, to the DC source, while the control electrodes of the transistor switches are connected to a control circuit.

## Description

### Technical Field

The invention relates to electrical engineering and may be used as an autonomous power supply for power consumers.

### Background Art

A prior art autonomous electric power supply comprises a direct current source and an inverter having an output that is connected in parallel to an active load. The prior art power supply is provided with a second direct current source, an automatic electronic switch, and two electronic transistor switches having a control system and a diode, the second direct current source being connected, similarly to the first source, to different inputs of the automatic electronic switch having an output that is also connected to the commutators of the two electronic transistor switches having a control system, the emitter of one of the transistor switches being connected to the inverter input, and the emitter of the other transistor switch being connected via the diode to a separate input of the automatic electronic switch (Russian Utility Model Patent No. 93,185, published on April 20, 2010). The prior art autonomous power supply is disadvantageous because it uses two direct current sources and the automatic electronic switch circuit is difficult to make and operate.

The autonomous power supply of the Russian utility model patent is the closest prior art of the claimed invention.

### Disclosure of Invention

The technical result produced by the claimed invention is that a single direct current source increases significantly the continuous operation time thereof to the length of the service life of the battery.

The above technical result is achieved in a rechargeable autonomous power supply in a single storage battery containing a direct current source and an inverter having an output connected via a bridge rectifier in parallel to an active load, which power supply is provided with a second bridge rectifier, a matching transformer, two electronic transistor switches having a control system, a diode, and capacitors, the input of the second bridge rectifier being connected in parallel to the secondary winding of the matching transformer that has its primary winding connected in series to the inverter output and the input of the first bridge rectifier having an output connected to the capacitor and, via an electronic switch, to the load with a capacitor, the output of the second bridge rectifier being connected to the second capacitor and, via the second electronic switch and diode, to the direct current source, the control electrodes of the transistor switches being connected to the control circuit.

### Brief Description of Drawings

FIG. 1 is the functional circuit diagram of the rechargeable autonomous power supply in a single storage battery.
FIG. 2 is a waveform of currents flowing in the power circuits of the electronic transistor switches.

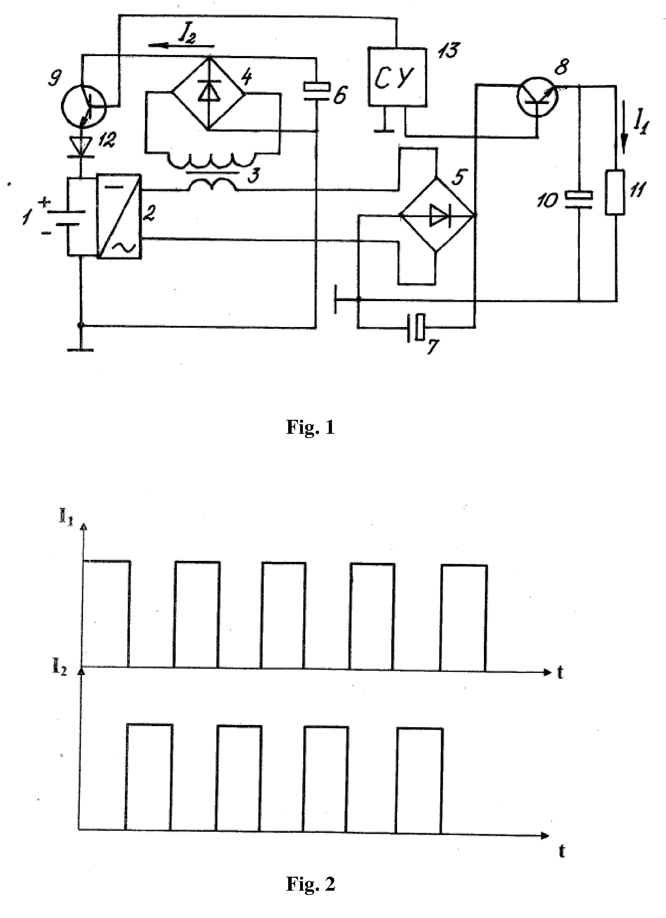

The rechargeable autonomous power supply in a single storage battery comprises a direct current source 1 (FIG. 1) connected to the input of an inverter 2 having its output connected in parallel to the input of a bridge converter 5 that has its output connected in parallel to a capacitor 7 and, via an electronic transistor switch 8, to a load 11 and capacitor 10, the primary winding of a matching transformer 3 being connected in series in the output circuit of inverter 2 and the secondary winding thereof being connected in parallel to the input of a bridge rectifier 4 having its output connected in parallel to a capacitor 6 and, via an electronic transistor switch 9 and diode 12, to direct current source 1, the control electrodes of the electronic transistor switches being connected to a control circuit 13.

### Best Mode for Carrying out the Invention

The autonomous power supply operates as follows:

Direct current source 1 supplies direct voltage to inverter 2, alternating voltage being supplied from the output thereof to the input of bridge rectifier 5, to be rectified and filtered by capacitor 7. Operation of the electronic transistor switches is synchronized such that each time when either of them is open the other is always closed. The electronic transistor switches are commutated alternately at a specified frequency. Electronic transistor switch 8 opens for a short time causing a direct current pulse to flow between bridge rectifier 5 with capacitor 7 and load 11 with capacitor 10. Current flows for a short time during the pulse period in the output circuit of inverter 2, via the primary winding of matching transformer 3. Magnetic flux generated by this current induces an electromagnetic force in the secondary winding of the matching transformer, said electromagnetic force being rectified by bridge rectifier 4 and charging capacitor 6. Next, electronic transistor switch 8 closes and switch 9 opens for capacitor 6 to be discharged via switch 9 and diode 12 to direct current source 1 to recharge the same.

The current waveform given in FIG. 2 shows the phase shift of current pulses in the power circuits of the electronic transistor switches.

## Claims

1. A rechargeable autonomous power supply in a single storage battery comprising a direct current source and an inverter having its output connected, via a bridge rectifier, in parallel to a real load, said power supply further having a second bridge rectifier, a matching transformer, and two electronic transistor switches with a control system, a diode, and a capacitors, the input of the second bridge rectifier being connected in parallel to the secondary winding of the matching transformer that has its primary winding connected in series to the inverter output and the input of the first bridge rectifier having its output connected in parallel to the capacitor and, via one electronic switch, to a load with a capacitor, the output of the second bridge rectifier being connected to the capacitor and, via the second electronic switch and diode, to the direct current source, and the control electrodes of the transistor switches being connected to the control circuit.
